(19) Europäisches Patentamt
European Patent Office
Office européen des brevets

(11) **EP 4 224 361 A1**

(12) **EUROPEAN PATENT APPLICATION**
published in accordance with Art. 153(4) EPC

(43) Date of publication:
**09.08.2023 Bulletin 2023/32**

(51) International Patent Classification (IPC):
**G06K 9/00** (2022.01)

(21) Application number: **20958157.8**

(52) Cooperative Patent Classification (CPC):
**G06V 20/588**

(22) Date of filing: **22.10.2020**

(86) International application number:
**PCT/CN2020/122725**

(87) International publication number:
**WO 2022/082574 (28.04.2022 Gazette 2022/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **LUO, Daxin
Shenzhen, Guangdong 518129 (CN)**
• **GAO, Lutao
Shenzhen, Guangdong 518129 (CN)**
• **MA, Sha
Shenzhen, Guangdong 518129 (CN)**

(74) Representative: **Maiwald GmbH
Engineering
Elisenhof
Elisenstrasse 3
80335 München (DE)**

(54) **LANE LINE DETECTION METHOD AND APPARATUS**

(57) Embodiments of this application provide a lane line detection method and apparatus, which relate to the field of sensor technologies, and can be used for security protection, assisted driving, and self-driving. The method includes: (S501) obtaining a first lane line based on a first image; (S502) determining at least one first region based on the first lane line and a first distance, where the first distance is related to a lane width; and (S503) determining, in the first region, a second lane line parallel to the first lane line. This avoids that a lane line that does not meet an actual situation of the lane line is obtained due to problems such as different shades of the lane line or partial blocking of the lane line, and ensures that a plurality of obtained lane lines are parallel, thereby obtaining a more accurate lane line detection result. The method improves a capability of an advanced driver assistance system ADAS in self-driving or assisted driving, and may be applied to the Internet of Vehicles, for example, vehicle-to-everything V2X, a Long Term Evolution technology LTE-V for communication between vehicles, or vehicle-to-vehicle V2V.

```
Obtain a first lane line based on a first image          ~ S501

                          ↓

Determine at least one first region based on the first lane line
and a first distance                                     ~ S502

                          ↓

Determine, in the first region, a second lane line parallel to the
first lane line                                          ~ S503
```

FIG. 5

## Description

## TECHNICAL FIELD

This application relates to the field of sensor technologies, and in particular, to a lane line detection method and apparatus.

## BACKGROUND

With social development, intelligent terminals such as an intelligent transportation device, a smart home device, and a robot are gradually entering people's daily lives. A sensor plays an important role in an intelligent terminal. Various sensors such as a millimeter-wave radar, a laser radar, an imaging radar, an ultrasonic radar, and a camera that are installed on an intelligent terminal enable the intelligent terminal to sense an ambient environment, collect data, recognize and track a moving object, recognize a static scenario, for example, a lane line or a signboard, plan a route in combination with a navigator and map data, and so on. For example, in a field, for example, a self-driving, security protection, or monitoring field, lane line detection may be performed based on a sensor. For example, in a traveling process, a vehicle obtains a road picture by using a camera, and a vehicle driving system detects and recognizes a lane line in the road picture, to assist in determining whether to take measures such as direction adjustment and lane change.

Currently, there are two commonly used lane line detection methods. A first method is a deep learning-based detection method, for example, a machine learning method such as a convolutional neural network is used to learn a lane line feature, segment a lane line, and then fit the lane line. A second method is a conventional computer vision detection method, for example, a method such as edge detection or color space is used to extract a feature of a lane line and then fit the lane line.

However, in the foregoing lane line detection methods, there is a problem that a lane line detection result is inaccurate.

## SUMMARY

Embodiments of this application provide a lane line detection method and apparatus. A second lane line parallel to a first lane line is generated in a first region, to avoid that a lane line that does not meet an actual situation of the lane line is obtained due to problems such as different shades of the lane line or partial blocking of the lane line, and ensure that a plurality of lane lines are parallel, thereby obtaining a more accurate lane line detection result.

According to a first aspect, an embodiment of this application provides a lane line detection method, including: obtaining a first lane line based on a first image; determining at least one first region based on the first lane line and a first distance, where the first distance is related to a lane width; and determining, in the first region, a second lane line parallel to the first lane line. In this way, in this embodiment of this application, the second lane line parallel to the first lane line is generated in the first region, to avoid that a lane line that does not meet an actual situation of the lane line is obtained due to problems such as different shades of the lane line or partial blocking of the lane line, and ensure that a plurality of lane lines are parallel, thereby obtaining a more accurate lane line detection result.

In a possible implementation, the first lane line is a lane line with a maximum quantity of pixels in the first image, or a quantity of pixels of the first lane line is greater than a first threshold. In this way, in this embodiment of this application, a lane line with a prominent feature may be obtained, and the lane line may also be understood as a lane line with a good recognition effect. When another parallel lane line is subsequently obtained based on the first lane line, a complete lane line can be obtained.

In a possible implementation, in this embodiment of this application, the determining at least one first region based on the first lane line and a first distance includes: determining the first distance that is in the first image and that corresponds to the lane width; and determining the at least one first region based on the first distance and a location of the first lane line in the first image. In this way, in this embodiment of this application, the first region is determined based on the first lane line with a good recognition effect, so that the second lane line that is determined in the first region and that is parallel to the first lane line is relatively more accurate.

In a possible implementation, in this embodiment of this application, the determining, in the first region, a second lane line parallel to the first lane line includes: determining a grayscale image of the first image; performing image enhancement and edge detection on a part that is in the first image and that corresponds to the first region, to obtain a grayscale image corresponding to the first region; updating, based on the grayscale image corresponding to the first region, a part that is in the grayscale image of the first image and that corresponds to the first region, to obtain a second image; and determining the second lane line in the first region based on the second image. In this way, in this embodiment of this application, image enhancement is performed on the part that corresponds to the first region and whose edge feature is unobvious, so that the second lane line that is determined in the first region and that is parallel to the first lane line is relatively more accurate.

In a possible implementation, in this embodiment of this application, the determining the second lane line in the first region based on the second image includes: determining, in an integral image constructed based on the second image, a location of a maximum of the integral image in the first region, where a horizontal coordinate of the integral image is a column quantity of image pixels, a vertical coordinate is a quantity of pixels of an image in a vertical axis direction, and the maximum of the integral image includes a maximum value of a quantity of pixels in the first region in a vertical coordinate direction; and determining the second lane line based on the location of the maximum of the integral image in the first region. In this way, in this embodiment of this application, a location of the second lane line is determined by determining the location of the maximum of the integral image, where the maximum of the integral image is a maximum value of a quantity of pixels of a lane line in the vertical coordinate direction, so that the second lane line that is generated at the location of the maximum of the integral image and that is parallel to the first lane line is relatively more accurate.

In a possible implementation, in this embodiment of this application, the determining, in an integral image constructed based on the second image, a location of a maximum of the integral image in the first region includes: straightening the second image based on the first lane line to obtain a third image, where the first lane line in the straightened third image is parallel to a vertical axis; generating the integral image based on the third image; and determining the location of the maximum of the integral image in the first region based on the integral image. In this way, in this embodiment of this application, the maximum of the integral image is obtained by straightening the second image based on the first lane line, so that the obtained maximum of the integral image is relatively more accurate.

In a possible implementation, in this embodiment of this application, the straightening the second image based on the first lane line to obtain a third image includes: straightening, by using any pixel of the first lane line as a reference point, the first lane line to obtain a third lane line parallel to the vertical axis; and straightening, based on a movement location and direction of another pixel in the first lane line during straightening, a pixel that is in the second image and that has a same vertical coordinate as the another pixel, to obtain the third image.

In a possible implementation, in this embodiment of this application, the determining the second lane line based on the location of the maximum of the integral image in the first region includes: generating, at the location of the maximum of the integral image for the third image, a fourth lane line parallel to the third lane line; and determining the second lane line based on the fourth lane line and a movement location and direction of another pixel in the first lane line during straightening.

In a possible implementation, the method further includes: outputting a lane line detection result including the first lane line and the second lane line.

In a possible implementation, in this embodiment of this application, the first image is a top view image of a lane line.

According to a second aspect, an embodiment of this application provides a lane line detection apparatus.

The lane line detection apparatus may be a vehicle having a lane line detection function, or may be another component having a lane line detection function. The lane line detection apparatus includes but is not limited to another sensor, for example, an in-vehicle terminal, an in-vehicle controller, an in-vehicle module, an in-vehicle module, an in-vehicle component, an in-vehicle chip, an in-vehicle unit, an in-vehicle radar, or an in-vehicle camera. A vehicle may implement the method provided in this application by using the in-vehicle terminal, the in-vehicle controller, the in-vehicle module, the in-vehicle module, the in-vehicle component, the in-vehicle chip, the in-vehicle unit, or the in-vehicle radar or camera.

The lane line detection apparatus may be an intelligent terminal, or disposed in an intelligent terminal having a lane line detection function other than a vehicle, or disposed in a component of the intelligent terminal. The intelligent terminal may be another terminal device, for example, an intelligent transportation device, a smart home device, or a robot. The lane line detection apparatus includes but is not limited to an intelligent terminal or another sensor, for example, a controller, a chip, a radar, or a camera in the intelligent terminal, another component, and the like.

The lane line detection apparatus may be a general-purpose device or a dedicated device. In specific implementation, the apparatus may alternatively be a desktop computer, a portable computer, a network server, a personal digital assistant (personal digital assistant, PDA), a mobile phone, a tablet computer, a wireless terminal device, an embedded device, or another device having a processing function. A type of the lane line detection apparatus is not limited in this embodiment of this application.

The lane line detection apparatus may alternatively be a chip or a processor having a processing function, and the lane line detection apparatus may include at least one processor. The processor may be a single-core (single-CPU) processor, or may be a multi-core (multi-CPU) processor. The chip or the processor having a processing function may be disposed in a sensor, or may not be disposed in the sensor but disposed at a receiving end of an output signal in the sensor. The processor includes but is not limited to at least one of a central processing unit (central processing unit, CPU), a graphics processing unit (graphics processing unit, GPU), a micro control unit (micro control unit, MCU), a micro processor (micro processor unit, MPU), and a coprocessor.

The lane line detection apparatus may alternatively be a terminal device, or may be a chip or a chip system in the terminal device. The lane line detection apparatus may include a processing unit. When the lane line detection apparatus is a terminal device, the processing unit may be a processor. The lane line detection apparatus may further include a storage unit, and the storage unit may be a memory. The storage unit is configured to store instructions, and the processing unit executes the instructions stored in the storage unit, so that the terminal device implements the lane line detection method described in any one of the first aspect or the possible implementations of the first aspect. When the lane line detection apparatus is a chip or a chip system in the terminal device, the processing unit may be a processor. The processing unit executes the instructions stored in the storage unit, so that the terminal device implements the lane line detection method described in any one of the first aspect or the possible implementations of the first aspect. The storage unit may be a storage unit (for example, a register or a cache) in the chip, or may be a storage unit (for example, a read-only memory or a random access memory) that is in the terminal device and that is located outside the chip.

For example, the processing unit is specifically configured to: obtain a first lane line based on a first image; determine at least one first region based on the first lane line and a first distance, where the first distance is related to a lane width; and determine, in the first region, a second lane line parallel to the first lane line.

In a possible implementation, the first lane line is a lane line with a maximum quantity of pixels in the first image, or a quantity of pixels of the first lane line is greater than a first threshold.

In a possible implementation, the processing unit is specifically configured to determine the first distance that is in the first image and that corresponds to the lane width. The processing unit is further specifically configured to determine the at least one first region based on the first distance and a location of the first lane line in the first image.

In a possible implementation, the processing unit is specifically configured to determine a grayscale image of the first image. The processing unit is specifically configured to perform image enhancement and edge detection on a part that is in the first image and that corresponds to the first region, to obtain a grayscale image corresponding to the first region. The processing unit is specifically configured to update, based on the grayscale image corresponding to the first region, a part that is in the grayscale image of the first image and that corresponds to the first region, to obtain a second image. The processing unit is further specifically configured to determine the second lane line in the first region based on the second image.

In a possible implementation, the processing unit is specifically configured to determine, in an integral image constructed based on the second image, a location of a maximum of the integral image in the first region, where a horizontal coordinate of the integral image is a column quantity of image pixels, a vertical coordinate is a pixel quantity of an image in a vertical axis direction, and the maximum of the integral image includes a maximum value of a quantity of pixels in the first region in a vertical coordinate direction. The processing unit is further specifically configured to determine the second lane line based on the location of the maximum of the integral image in the first region.

In a possible implementation, the processing unit is specifically configured to straighten the second image based on the first lane line to obtain a third image, where the first lane line in the straightened third image is parallel to a vertical axis. The processing unit is specifically configured to generate the integral image based on the third image. The processing unit is further specifically configured to determine the location of the maximum of the integral image in the first region based on the integral image.

In a possible implementation, the processing unit is specifically configured to straighten, by using any pixel of the first lane line as a reference point, the first lane line to obtain a third lane line parallel to the vertical axis. The processing unit is further specifically configured to straighten, based on a movement location and direction of another pixel in the first lane line during straightening, a pixel that is in the second image and that has a same vertical coordinate as the another pixel, to obtain the third image.

In a possible implementation, the processing unit is specifically configured to generate, at the location of the maximum of the integral image for the third image, a fourth lane line parallel to the third lane line. The processing unit is further specifically configured to determine the second lane line based on the fourth lane line and a movement location and direction of another pixel in the first lane line during straightening.

In a possible implementation, the processing unit is further configured to output a lane line detection result including the first lane line and the second lane line.

In a possible implementation, the first image is a top view image of a lane line.

According to a third aspect, an embodiment of this application further provides a sensor system, configured to provide a lane line detection function for a vehicle. The sensor system includes at least one lane line detection apparatus mentioned in the foregoing embodiment of this application, and other sensors such as a camera and a radar. At least one sensor apparatus in the system may be integrated as an entire system or a device, or at least one sensor apparatus in the system may be independently disposed as an element or an apparatus.

According to a fourth aspect, an embodiment of this application further provides a system applied to unmanned driving or intelligent driving. The system includes at least one lane line detection apparatus mentioned in the foregoing embodiment of this application and at least one of other sensors such as a camera and a radar. At least one apparatus in the system may be integrated as an entire system or a device, or at least one apparatus in the system may be independently disposed as an element or an apparatus.

Further, any one of the foregoing systems may interact with a central controller of a vehicle to provide detection and/or fusion information for decision or control of driving of the vehicle.

According to a fifth aspect, an embodiment of this application further provides a terminal. The terminal includes at least one lane line detection apparatus mentioned in the foregoing embodiment of this application or any one of the foregoing systems. Further, the terminal may be a smart home device, an intelligent manufacturing device, an intelligent industrial device, an intelligent transportation device (including an unmanned aerial vehicle, a vehicle, or the like), or the like.

According to a sixth aspect, this application provides a chip or a chip system. The chip or the chip system includes at least one processor and a communications interface. The communications interface and the at least one processor are interconnected by using a line. The at least one processor is configured to run a computer program or instructions to perform the lane line detection method described in any one of the implementations of the first aspect.

The communications interface in the chip may be an input/output interface, a pin, a circuit, or the like.

In a possible implementation, the chip or the chip system described in this application further includes at least one memory, and the at least one memory stores instructions. The memory may be a storage unit in the chip, for example, a register or a cache; or may be a storage unit (for example, a read-only memory or a random access memory) of the chip.

According to a seventh aspect, an embodiment of this application provides a computer-readable storage medium. The computer-readable storage medium stores a computer program or instructions, and when the computer program or the instructions are run on a computer, the computer is enabled to perform the lane line detection method described in any one of the implementations of the first aspect.

According to an eighth aspect, an embodiment of this application provides a target tracking apparatus, including at least one processor and an interface circuit. The interface circuit is configured to provide information input and/or information output for the at least one processor, and the at least one processor is configured to run code instructions to implement any method in any one of the first aspect or the possible implementations of the first aspect.

It should be understood that the second aspect to the eighth aspect of the embodiments of this application correspond to the technical solution in the first aspect of the embodiments of this application, and beneficial effects achieved by the aspects and corresponding feasible implementations are similar. Details are not described again.

## BRIEF DESCRIPTION OF DRAWINGS

FIG. 1 is a schematic diagram of a self-driving scenario according to an embodiment of this application;

FIG. 2 is a schematic flowchart of an existing conventional computer vision detection method;

FIG. 3 is a schematic diagram of a structure of a self-driving vehicle according to an embodiment of this application;

FIG. 4 is a constructed integral image according to an embodiment of this application;

FIG. 5 is a schematic flowchart of a lane line detection method according to an embodiment of this application;

FIG. 6 is a schematic diagram of a method for determining a lane line location according to an embodiment of this application;

FIG. 7 is a schematic diagram of a determined first lane line according to an embodiment of this application;

FIG. 8 is a schematic diagram of a determined first region according to an embodiment of this application;

FIG. 9 is a schematic flowchart of determining a second lane line according to an embodiment of this application;

FIG. 10 is a schematic diagram of enhancing a part that is in an image and that corresponds to a first region according to an embodiment of this application;

FIG. 11 is a schematic flowchart of determining a second lane line according to an embodiment of this application;

FIG. 12 is a schematic flowchart of determining a second lane line according to an embodiment of this application;

FIG. 13 is a schematic diagram of straightening a first image according to an embodiment of this application;

FIG. 14 is a schematic diagram of a structure of a lane line detection apparatus according to an embodiment of this application; and

FIG. 15 is a schematic diagram of a structure of a chip according to an embodiment of this application.

## DESCRIPTION OF EMBODIMENTS

To clearly describe the technical solutions in embodiments of this application, terms such as "first" and "second" are used in embodiments of this application to distinguish between same items or similar items that have basically same functions or purposes. For example, a first log and a second log are merely intended to distinguish between network logs in different time windows, and are not intended to limit a sequence of the network logs. A person skilled in the art may understand that the terms such as "first" and "second" do not limit a quantity, and the terms such as "first" and "second" do not limit a definite difference.

It should be noted that in this application, the word such as "example" or "for example" is used to represent giving an example, an illustration, or a description.

Any embodiment or design solution described as "example" or "for example" in this application should not be explained as being more preferred or having more advantages than another embodiment or design solution. Exactly, use of the word such as "example" or "for example" is intended to present a related concept in a specific manner.

In this application, "at least one" means one or more, and "a plurality of" means two or more; and "and/or" describes an association relationship between associated objects and represents that three relationships may exist. For example, A and/or B may represent the following cases: Only A exists, both A and B exist, and only B exists, where A and B may be singular or plural.

The following describes the technical solutions in embodiments of the present invention with reference to the accompanying drawings in embodiments of the present invention. It is clear that the described embodiments are merely some rather than all of embodiments of the present invention. All other embodiments obtained by a person of ordinary skill in the art based on embodiments of the present invention without creative efforts shall fall within the protection scope of the present invention.

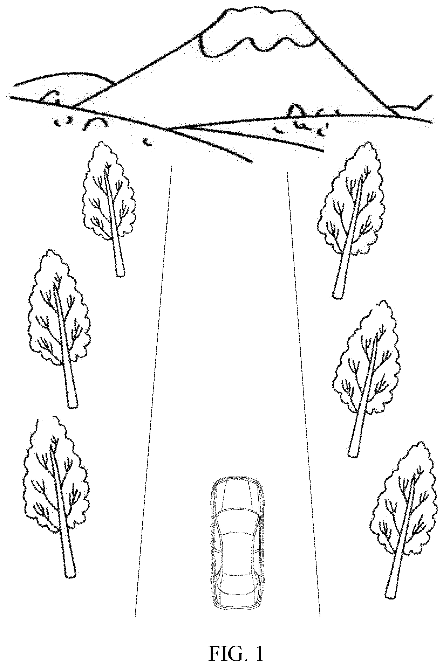

With continuous development of technologies such as artificial intelligence and visual technologies, self-driving gradually becomes a new trend of an intelligent vehicle. However, driving security is particularly important in a self-driving process. To effectively improve driving security, as shown in FIG. 1, in a traveling process of a vehicle, a vehicle driving system detects a lane line, and gives a reminder before the vehicle deviates from a lane of the vehicle or is about to deviate from the lane of the vehicle, to adjust a location of the vehicle in the lane in a timely manner, thereby ensuring traveling security and effectively reducing or avoiding a traffic accident. Therefore, lane line detection is one of important tasks in a self-driving system.

Currently, possible lane line detection methods include a deep learning-based detection method and a conventional computer vision detection method.

For example, in a possible implementation of the deep learning-based detection method, a vehicle driving system learns a lane line feature by using a machine learning method, for example, a convolutional neural network, segments a lane line, and then fits the lane line, to obtain a lane line detection result.

However, the deep learning-based detection method requires specially labeled data, and there is a problem of insufficient data or poor data quality. In addition, the labeled data needs to be trained by a high-performance computer to obtain a model, and there is a specific limitation.

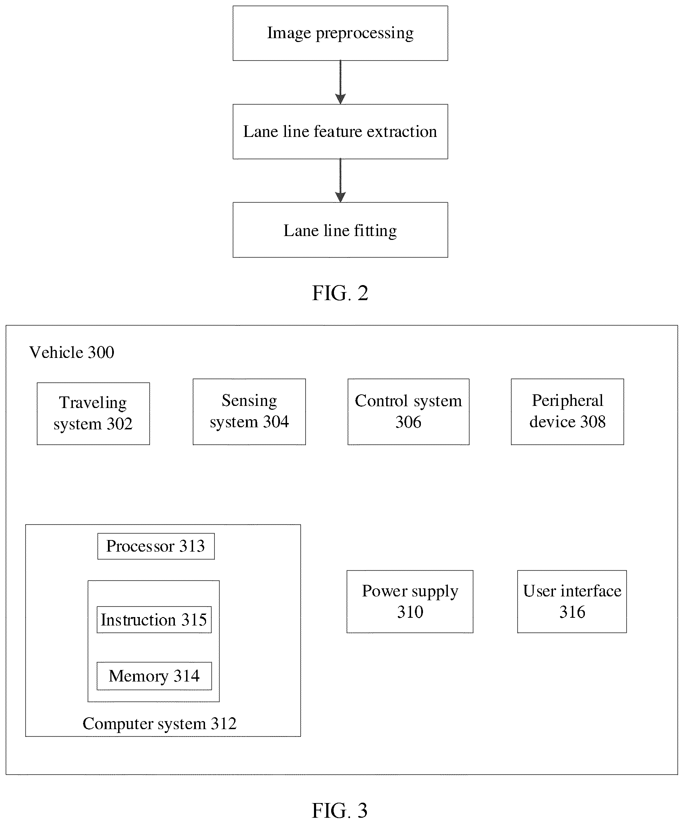

For example, FIG. 2 is a flowchart of a conventional computer vision detection method.

As shown in FIG. 2, in a preprocessing phase, a vehicle driving system preprocesses a road picture obtained from a camera. A preprocessing process may include Gaussian blur and graying. In a possible understanding manner, noise in the picture may be reduced by performing Gaussian blur on the road picture, and pixel information of a lane line may be obtained by performing graying on the road picture.

In a lane line feature extraction phase, the vehicle driving system may extract a feature of a lane line with a specified color by using a color histogram or drawing a lane line color interval. In a possible implementation, for white and yellow lane lines on a road, corresponding color intervals may be separately set in RGB color space to extract features of lane lines with corresponding colors. Finally, lane line features extracted in different color intervals are combined to obtain features of all lane lines.

In a lane line fitting phase, after extracting the lane line feature by using the foregoing method, the vehicle driving system fits the lane line by using an algorithm, for example, Hough transform or a sliding window, to obtain a lane line detection result.

However, when lane line detection is performed by using the foregoing computer vision method, although the limitation of the deep learning-based detection method is compensated for to some extent, and specially labeled data is no longer required, in an actual scenario, color shades of a lane line may be different, the lane line may be partially blocked, and so on. When the vehicle driving system extracts a lane line feature, a lane line feature may be ignored at a location at which a color is blurry and unclear or an edge grayscale change is unobvious. As a result, lane line pixels are not completely extracted. Due to a difference between pixels extracted from the lane lines, after the lane lines are separately fitted, curve parameters of obtained lane lines are also different. Consequently, final fitting results are not parallel. In a possible understanding manner, the curve parameter of the lane line may be a curvature of the lane line, and indicates an extent to which the lane line deviates from a straight line.

Based on the foregoing problems existing in the deep learning-based detection method and the conventional computer vision detection method, the embodiments of this application provide a lane line detection method. A second lane line parallel to a first lane line is generated in a first region, to avoid that a lane line that does not meet an actual situation of the lane line is obtained due to problems such as different shades of the lane line or partial blocking of the lane line, and ensure that a plurality of lane lines are parallel, thereby obtaining a more accurate lane line detection result.

FIG. 3 is a function block diagram of a vehicle 300 according to an embodiment of the present invention. In some embodiments, the vehicle 300 is configured to be in a complete or partial self-driving mode. For example, the vehicle 300 may control itself in the self-driving mode, and through a manual operation, may determine current statuses of the vehicle and an ambient environment of the vehicle, determine possible behavior of at least one another vehicle in the ambient environment, determine a confidence level corresponding to a possibility that the another vehicle performs the possible behavior, and control the vehicle 300 based on determined information. When the vehicle 300 is in the self-driving mode, the vehicle 300 may be configured to operate without interacting with a person.

The vehicle 300 may include various subsystems, for example, a traveling system 302, a sensor system 304, a control system 306, one or more peripheral devices 308, a power supply 310, a computer system 312, and a user interface 316. Optionally, the vehicle 300 may include more or fewer subsystems, and each subsystem may include a plurality of elements. In addition, the subsystems and elements of the vehicle 300 may be interconnected in a wired or wireless manner. The following specifically describes the computer system 312 related to the present invention.

Some or all functions of the vehicle 300 are controlled by the computer system 312. The computer system 312 may include at least one processor 313. The processor 313 executes an instruction 315 stored in a non-transitory computer-readable medium, for example, a data storage apparatus 314. The computer system 312 may alternatively be a plurality of computing devices that control individual components or subsystems of the vehicle 300 in a distributed manner.

The processor 313 may be any conventional processor, for example, a commercially available CPU. Alternatively, the processor may be a dedicated device, for example an ASIC or another hardware-based processor. Although FIG. 3 functionally illustrates the processor, the memory, and other elements of the computer 310 in a same block, a person of ordinary skill in the art should understand that the processor, the computer, or the memory may actually include a plurality of processors, computers, or memories that may or may not be stored in a same physical housing. For example, the memory may be a hard disk drive or another storage medium located in a housing different from that of the computer 310. Therefore, reference to the processor or the computer should be understood as including reference to a set of processors or computers or memories that may or may not operate in parallel. Different from using a single processor to perform the steps described herein, some components such as a steering component and a deceleration component each may include a processor of the component. The processor performs only calculation related to a component-specific function.

In aspects described herein, the processor may be located far away from the vehicle and wirelessly communicate with the vehicle. In another aspect, some processes described herein are performed on the processor disposed in the vehicle, and other processes are performed by a remote processor, including performing a step necessary for single manipulation.

In some embodiments, the data storage apparatus 314 may include the instruction 315 (for example, program logic), and the instruction 315 may be executed by the processor 313 to perform various functions of the vehicle 300. In an example, the data storage apparatus 314 may include a lane line detection instruction 315 that may be executed by the processor 313 to perform a lane line detection function of the vehicle 300.

In addition to the instruction 315, the data storage apparatus 314 may further store data, for example, a road map, route information, a location, a direction, a speed, and other such vehicle data of the vehicle, and other information. Such information may be used by the vehicle 300 and the computer system 312 during operation of the vehicle 300 in an autonomous mode, a semi-autonomous mode, and/or a manual mode.

In an example, the data storage apparatus 314 may store environment information obtained from the sensor system 304 or another component of the vehicle 300. The environment information may be, for example, whether there is a green belt, a traffic light, a pedestrian, or the like near an environment in which the vehicle is currently located. The vehicle 300 may calculate, by using an algorithm, for example, machine learning, whether there is a green belt, a traffic light, a pedestrian, or the like near the environment in which the vehicle is currently located. The data storage apparatus 314 may further store status information of the vehicle and status information of another vehicle that interacts with the vehicle. The status information includes but is not limited to a speed, an acceleration, a heading angle, and the like of the vehicle. For example, the vehicle obtains a distance between another vehicle and the vehicle, a speed of another vehicle, and the like based on a speed measurement function and a distance measurement function of a radar 326. Therefore, the processor 313 may obtain the environment information or the status information from the data storage apparatus 314, and execute the instruction 315 including a lane line detection program, to obtain a detection result for a lane line on a road. In addition, the processor 313 obtains a final driving policy based on environment information of an environment in which the vehicle is located, status information of the vehicle, status information of another vehicle, and a conventional rule-based driving policy in combination with the lane line detection result and environment information obtained by the sensor system 304; and controls, by using the traveling system 302, the vehicle to perform self-driving (for example, going straight, steering, or turning around).

Optionally, one or more of the foregoing components may be installed separating from or associated with the vehicle 300. For example, the data storage apparatus 314 may exist partially or completely separating from the vehicle 300. The foregoing components may be communicatively coupled together in a wired and/or wireless manner.

Optionally, the foregoing components are merely examples. In actual application, a component in each of the foregoing modules may be added or deleted based on an actual requirement. FIG. 3 should not be understood as a limitation on this embodiment of the present invention.

The vehicle 300 may be a car, a truck, a motorcycle, a bus, a boat, an airplane, a helicopter, a lawn mower, a recreational vehicle, a playground vehicle, a construction device, a trolley, a golf cart, a train, a handcart, and the like. This is not limited in this embodiment of the present invention.

The following describes some terms in the embodiments of this application. The terms explained in the embodiments of this application are intended for ease of understanding by a person skilled in the art, and do not constitute a limitation on the embodiments of this application.

A first lane line described in the embodiments of this application may be any lane line obtained by recognizing a first image. The first lane line is used as a basis for subsequently obtaining another lane line, so that a plurality of parallel lane lines can be obtained in the embodiments of this application.

In a possible implementation, to obtain a better lane line detection effect, the first lane line may be a lane line with a prominent feature, or may be understood as a lane line with a good recognition effect. For example, the first lane line may be a lane line with a maximum quantity of pixels in the first image. Alternatively, for example, a quantity of pixels of the first lane line is greater than a first threshold. In a possible understanding manner, the first threshold may be set manually or by a machine. When the quantity of pixels of the first lane line is greater than the first threshold, it may be considered that the first lane line is complete. When another parallel lane line is subsequently obtained based on the first lane line, a complete lane line can be obtained.

For example, in a possible implementation in which the first lane line is a lane line with a maximum quantity of pixels in the first image, a vehicle driving system detects the first image to obtain a plurality of lane lines, and selects a lane line with a maximum quantity of pixels from the plurality of lane lines, to obtain the first lane line.

For example, in a possible implementation in which the first lane line is a lane line whose pixel quantity is greater than the first threshold, a vehicle driving system sets the first threshold for the quantity of pixels of the first lane line, and selects, from a plurality of lane lines that are obtained by detecting the first image, a lane line whose pixel quantity is greater than the first threshold, to obtain the first lane line.

In a possible implementation, when none of quantities of pixels of the plurality of lane lines reaches the first threshold, the vehicle driving system performs image enhancement on the first image, and then performs detection again on a road picture obtained after image enhancement. The vehicle driving system selects, from a plurality of lane lines that are obtained through re-detection, a lane line whose pixel quantity is greater than the first threshold, to obtain the first lane line.

A second lane line described in the embodiments of this application may be a lane line existing on a road other than the first lane line. The second lane line is generated based on the first lane line, and the second lane line is parallel to the first lane line.

A first region described in the embodiments of this application may be a region in which the second lane line exists. In a possible understanding manner, the first region described in the embodiments of this application is not a first region in a specific image, but a region that may include a lane line in each image. The first region may correspond to different content in different images. For example, a part that is in the first image and that corresponds to the first region may be an image that is in the first image and that is located in the first region, and a part that is in a second image and that corresponds to the first region may be an image that is in the second image and that is located in the first region.

A maximum of an integral image described in the embodiments of this application includes a maximum value of the sum of pixels in the first region in a vertical coordinate direction. A horizontal coordinate of the integral image is a column quantity of pixels in an image, and a vertical coordinate is a quantity of lane line pixels in the image in a vertical axis direction.

In a possible implementation, the integral image is constructed based on a grayscale image. The grayscale image may be a grayscale image of the first image or a grayscale image obtained after the grayscale image corresponding to the first image is processed.

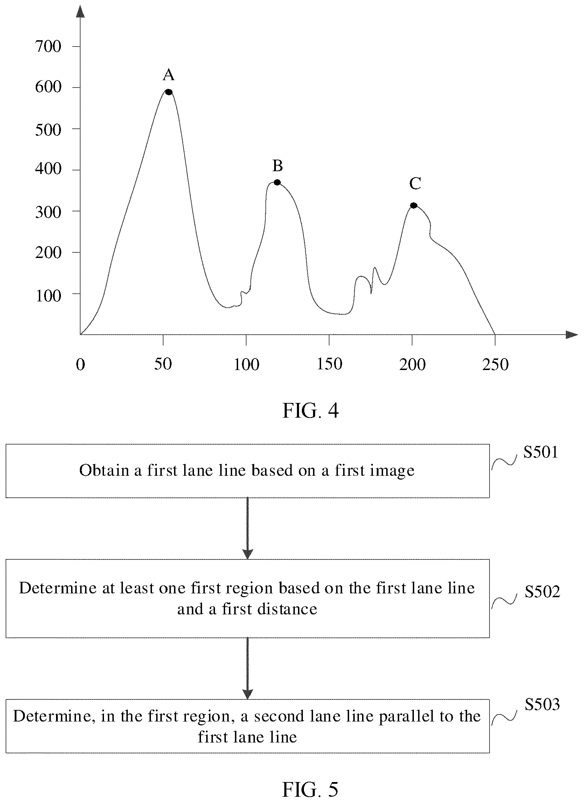

For example, if resolution of the grayscale image of the first image is 250*700, the grayscale image of the first image has 250 pixels in a horizontal direction and 700 pixels in a vertical direction, that is, there are 250 columns of pixels in the grayscale image of the first image, and a maximum quantity of lane line pixels in each column is 700. For example, FIG. 4 shows an integral image constructed for the grayscale image of the first image according to an embodiment of this application. As shown in FIG. 4, a range of a horizontal coordinate of the integral image is 0 to 250, and a range of a vertical coordinate of the integral image is 0 to 700. In a possible understanding manner, a point A, a point B, and a point C each are a maximum of the integral image. The point A corresponds to a maximum vertical coordinate value, that is, a column in which the point A is located corresponds to a largest maximum of pixels. In this case, the point A may be a location of the first lane line. Vertical coordinates corresponding to the point B and the point C are respectively maximum values of the sum of quantities of pixels in the first region in a vertical coordinate direction in the integral image constructed for the grayscale image corresponding to the first image.

The following describes the lane line detection method in this application in detail by using specific embodiments. It should be noted that the following several specific embodiments may be combined with each other, and same or similar content is not repeatedly described in different embodiments.

FIG. 5 shows a lane line detection method according to an embodiment of this application. The method includes the following steps.

S501: Obtain a first lane line based on a first image.

The first image described in this embodiment of this application may be a road picture obtained by using a camera. The first image may be a color image.

The camera in this embodiment of this application may be a camera in a driver monitoring system, a cockpit camera, an infrared camera, an event data recorder (namely, a video recording terminal), or the like. This is not specifically limited in this embodiment of this application.

In this embodiment of this application, in a possible implementation of obtaining the first lane line based on the first image, a vehicle driving system detects the first image to obtain a plurality of lane lines, and selects any lane line from the plurality of obtained lane lines as the first lane line. In this embodiment of this application, methods for detecting the first image may include a deep learning-based method, a computer vision-based method, and the like.

In a possible implementation, the vehicle driving system detects the first image by using the deep learning-based method. For example, a neural network model that can output a plurality of lane lines may be obtained through training by using an image sample including a lane line, a plurality of lane lines may be obtained by inputting the first image into the neural network model, and any lane line is selected from the plurality of lane lines as the first lane line.

The image sample including a lane line in this embodiment of this application may include a road picture sample, and the road picture sample may be obtained by using a database. The database used in this embodiment of this application may be an existing public database, or may be a database built for training a model.

In another possible implementation, in this embodiment of this application, the first image is detected by using the computer vision-based method. A plurality of lane lines are obtained after lane line pixel extraction, lane line fitting, and other processing are performed, and any lane line is selected from the plurality of lane lines as the first lane line.

In a lane line pixel extraction process, in a possible implementation, the vehicle driving system obtains pixel information of a lane line by performing edge detection on the first image.

Before performing edge detection on the first image, the vehicle driving system may perform graying processing on the first image, and change the first image including brightness and a color to a grayscale image, to facilitate subsequent edge detection on the image. In addition, to reduce impact caused by noise in the image on edge detection, Gaussian blur may be performed on the grayscale image of the first image. In a possible understanding manner, some relatively unclear noise in the grayscale image of the first image may be removed after Gaussian blur processing. In this way, edge information of a lane line can be obtained more accurately.

After the graying processing and the Gaussian blur processing are completed for the first image, for example, the vehicle driving system performs edge detection on a processed first image by using an algorithm, for example Canny, to obtain edge information of the processed first image.

In addition to edge information of a lane line, the edge information obtained by performing edge detection on the processed first image may further include other edge information, for example, edge information of a tree or a house on a roadside. In this case, the vehicle driving system may infer a location of a lane line in the first image based on an angle, a shooting direction, and the like of the camera, screen out other edge information, and retain edge information of the lane line, to finally obtain an image including pixel information of the lane line on a road.

In a possible implementation in which the vehicle driving system infers the location of the lane line in the first image based on the angle, the shooting direction, and the like of the camera, when a vehicle moves forward, the shooting direction of the camera is a road region in front of a vehicle head, and it may be inferred that the lane line is at a lower location in the first image; when the vehicle moves backward, the shooting direction of the camera is a road region behind a vehicle tail, and it may be inferred that the lane line is at a lower location in the first image; or when the camera is a 360-degree multi-angle camera, the shooting direction may be a road region around the vehicle 360 degrees, and it may also be inferred that the lane line is at a lower location in the first image.

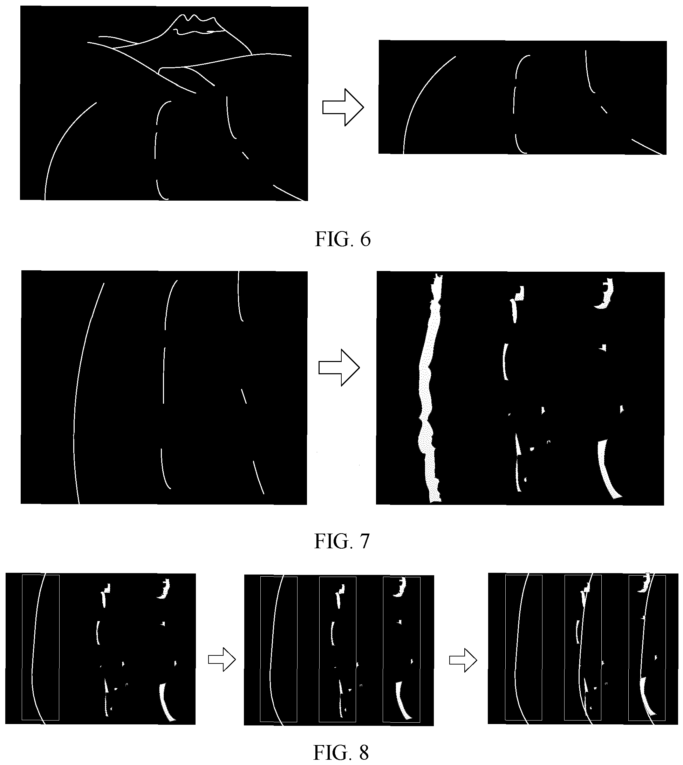

For example, as shown in FIG. 6, if a left image in FIG. 6 is obtained after the vehicle driving system performs edge detection on the processed first image, the shooting direction of the camera is a region in front of the vehicle head, and it may be inferred that the lane line is located in a lower region in the image. As shown in a right image in FIG. 6, the vehicle driving system sets the lower region in the image as a region of interest, to obtain pixel information of the lane line.

In a possible implementation, when the first image is a top view image, the lane line is located in the entire obtained image. In this case, the edge information obtained after edge detection is performed on the processed first image is the pixel information of the lane line. In other words, the vehicle driving system may infer the location of the lane line in the first image based on the angle, the shooting direction, and the like of the camera, and the step of screening out edge information other than that of the lane line is an optional step.

In the lane line pixel extraction process, in another possible implementation, the vehicle driving system may perform color segmentation on the first image based on a color feature of a lane line in the first image, to obtain an image including lane line pixel information.

For example, based on the color feature (for example, white and/or yellow) of the lane line, the vehicle driving system may choose to separately set corresponding color intervals in color space (for example, RGB color space) to extract pixel information of lane lines with corresponding colors in the first image. When lane lines in the obtained first image have two colors, the vehicle driving system combines lane line pixel information extracted in different color intervals, to obtain the image including the lane line pixel information.

In a lane line fitting process, the vehicle driving system fits, by using an algorithm, for example, a sliding window or a Hough transform, the image including the lane line pixel information to obtain a plurality of lane lines, and determines the first lane line based on the plurality of lane lines obtained through fitting.

For example, in a possible implementation in which the vehicle driving system fits, by using an algorithm, for example, a sliding window or a Hough transform, the image including the lane line pixel information to obtain a plurality of lane lines, the vehicle driving system selects N (N may be a natural number greater than or equal to 1) pixels as search start points based on locations of lane line pixels at a bottom of the image, and then generates an initial sliding window by using each of the selected search start points as a center, to complete a bottom-up search. In a possible understanding manner, a quantity of search start points may be the same as a quantity of lane lines on a road, and the bottom-up search in each initial sliding window may be understood as a process of finding a pixel of a lane line. A quantity of sliding windows in a vertical direction and a width of the sliding window may be set manually or by a machine, and a height of the sliding window may be obtained by dividing a quantity of pixels in a picture in the vertical direction by a set quantity of sliding windows.

After a width and a height of the initial sliding window are determined, the vehicle driving system determines a center of a next sliding window based on an average value of coordinates of lane line pixels in the initial sliding window, and then repeatedly performs the operation, that is, a location of a sliding window in each search is determined by a center in a next window, until the sliding window covers the lane line pixels in the image. Finally, second-order polynomial fitting is performed on these center points to obtain a plurality of lane lines.

For example, in a possible implementation of determining the first lane line based on the plurality of lane lines obtained through fitting, the vehicle driving system selects any lane line from the plurality of obtained lane lines, to obtain the first lane line.

For example, in another possible implementation of determining the first lane line based on the plurality of lane lines obtained through fitting, a region of each lane line is generated based on locations of the plurality of lane lines obtained through fitting, and then pixels in the region in which the lane line is located are fitted by using a random sample consensus (random sample consensus, RANSAC) algorithm, to obtain a plurality of lane lines. In a possible understanding manner, a plurality of lane lines obtained through fitting in a region by using the RANSAC algorithm have a better recognition effect than a plurality of lane lines obtained through fitting directly based on an image. In this case, the vehicle driving system selects any lane line from the plurality of lane lines obtained through fitting by using the RANSAC algorithm, to obtain the first lane line.

For example, a left image in FIG. 7 shows an image obtained after lane line pixel extraction is performed on the first image, and a right image in FIG. 7 shows an image obtained after edge detection is performed on the processed first image. The vehicle driving system detects the image including the lane line pixel information, and selects a lane line close to a left side as the first lane line, where the obtained first lane line is shown in a left image in FIG. 8.

S502: Determine at least one first region based on the first lane line and a first distance.

In a possible understanding manner, the first distance is related to a lane width.

For example, a relationship between the first distance and the lane width may be determined by obtaining an intrinsic parameter and an extrinsic parameter of the camera.

For example, the relationship between the first distance and the lane width may alternatively be determined by using priori knowledge. The priori knowledge may be a table established based on a relationship between a pixel in a picture historically obtained by the camera and a distance actually corresponding to the pixel. In a possible understanding manner, on different roads, different road widths correspond to different first distances. After a specific road width is obtained, the first distance may be obtained by querying the table.

In a possible understanding manner, the first region may be a region in which a second lane line exists. There may be one or more first regions. Specifically, when there is one first region, there is a single lane on the road; or when there are a plurality of first regions, there are a plurality of lanes on the road.

In a possible understanding manner, the first region described in this embodiment of this application is not a first region in a specific image, but a region that may include a lane line in each image. The first region may correspond to different content in different images. For example, a part that is in the first image and that corresponds to the first region may be an image that is in the first image and that is located in the first region. In a possible implementation, in this embodiment of this application, a region in which the first lane line is located may be determined based on a location of the first lane line in the first image, and then the region in which the first lane line is located is translated based on the first distance, to determine the at least one first region.

For example, the vehicle driving system may determine, based on a location of the first lane line shown in the left image in FIG. 8, the region in which the first lane line is located, namely, a rectangular region outside the first lane line. The vehicle driving system translates the region in which the first lane line is located, to separately obtain regions in which other lane lines are located, as shown in a middle image in FIG. 8, that is, first regions. A distance by which the region in which the first lane line is located is translated is related to the first distance.

S503: Determine, in the first region, a second lane line parallel to the first lane line.

In a possible understanding manner, the second lane line may be a lane line existing on a road other than the first lane line. There may be one or more second lane lines.

In a possible implementation, the vehicle driving system may determine, in the first region based on the first distance, the second lane line parallel to the first lane line. A distance between two adjacent parallel lane lines is the first distance.

In a possible understanding manner, lane lines on a road may be classified into a vertical lane line and a curved lane line in terms of shape, and curve parameters corresponding to different curved lane lines are different. The vehicle driving system translates the first lane line to the first region to obtain the second lane line, that is, a curve parameter of the first lane line is the same as that of the second lane line. The curve parameter is an extent to which a curve deviates from a straight line. For example, when the first lane line is vertical, the second lane line is also vertical; or when the first lane line is a curve, the second lane line is a curved lane line whose curve parameter is the same as that of the first lane line.

For example, as shown in the left image in FIG. 8, the first lane line is a curved lane line. Two first regions shown in the middle image in FIG. 8 are obtained based on the location of the first lane line by using the method for determining the first region in S502. The vehicle driving system obtains, in the first region based on the first distance, two lane lines shown in a right image in FIG. 8, that is, second lane lines. The second lane line is a curved lane line whose curve parameter is the same as that of the first lane line. In a possible understanding manner, a distance between pixels with a same vertical coordinate in two adjacent lane lines in the image is the first distance.

This embodiment of this application provides a lane line detection method. The second lane line parallel to the first lane line is generated in the first region, to avoid that a lane line that does not meet an actual situation of the lane line is obtained due to problems such as different shades of the lane line or partial blocking of the lane line, and ensure that a plurality of lane lines are parallel, thereby obtaining a more accurate lane line detection result.

Based on the embodiment corresponding to FIG. 5, in a possible implementation, the first image is a top view image of a lane line.

In a possible implementation, perspective transformation occurs on the road picture obtained by the camera. For example, a lane line in a long shot is close to the middle, and a thickness of the lane line in the long shot is different from that in a close shot. To avoid an error caused by perspective transformation to a lane line detection result, the vehicle driving system may perform inverse perspective transformation on the road picture on which perspective transformation occurs, for example, convert the road picture into a top view angle, to obtain the first image. In a possible understanding manner, lane lines in the first image obtained after inverse perspective transformation are parallel to each other, and widths of the lane lines are equal.

For example, in a possible implementation of performing inverse perspective transformation on the road picture to obtain the first image, a transformation matrix of the camera is calculated, where the transformation matrix may be obtained by multiplying an intrinsic parameter matrix and an extrinsic parameter matrix of the camera, and the transformation matrix of the camera represents imaging of the camera; and inverse transformation may be performed on the transformation matrix to implement inverse perspective transformation to eliminate perspective deformation. A transformation process may be represented by the following formula:

$$\begin{bmatrix} u \\ v \\ \omega \end{bmatrix} = \begin{bmatrix} fx & 0 & c_x \\ 0 & fy & c_y \\ 0 & 0 & 1 \end{bmatrix} \begin{bmatrix} r_{11} & r_{12} & r_{13} \\ r_{21} & r_{22} & r_{23} \\ r_{31} & r_{32} & r_{33} \end{bmatrix} \begin{bmatrix} x \\ y \\ z \end{bmatrix}$$

where $\begin{bmatrix} fx & 0 & cx \\ 0 & fy & cy \\ 0 & 0 & 1 \end{bmatrix}$ is the intrinsic parameter matrix of the camera; $\begin{bmatrix} r_{11} & r_{12} & r_{13} \\ r_{21} & r_{22} & r_{23} \\ r_{31} & r_{32} & r_{33} \end{bmatrix}$ is the extrinsic parameter matrix obtained through camera calibration; $\begin{bmatrix} u \\ v \\ \omega \end{bmatrix}$ is coordinates after inverse perspective transformation; $\begin{bmatrix} x \\ y \\ z \end{bmatrix}$ is coordinates before inverse perspective transformation; and in the intrinsic parameter matrix, $fx$ and $fy$ are related to a lens focal length of the camera, and $c_x$ and $c_y$ are a location of an optical center of the camera in a pixel coordinate system and correspond to center coordinates in an image matrix. Parameters in the intrinsic parameter matrix and the extrinsic parameter matrix of the camera may be obtained through camera calibration.

It may be understood that a method for performing inverse perspective transformation on the first image is not limited to the foregoing calculation method. A person skilled in the art may alternatively obtain a top view image of the road picture through calculation in another manner. This is not specifically limited in this embodiment of this application.

In a possible implementation, perspective transformation may not occur on the road picture obtained by the camera of the vehicle driving system. In this case, performing inverse perspective transformation on the road picture obtained by the camera is an optional step, and the road picture obtained by the camera may be used as the first image.

Based on the embodiment corresponding to FIG. 5, in a possible implementation, S502 includes: determining the first distance that is in the first image and that corresponds to the lane width, and determining the at least one first region based on the first distance and a location of the first lane line in the first image.

In a possible implementation, a linear relationship between a lane width and a pixel in the first image is obtained based on the intrinsic parameter matrix and the extrinsic parameter matrix of the camera. Then, the first distance that is in the first image and that corresponds to the lane width is determined based on the linear relationship between a lane width and a pixel in the first image. In a possible understanding manner, the first distance that is in the first image and that corresponds to the lane width may be a quantity of pixels in the first image that correspond to the lane width.

For example, as shown in the left image in FIG. 8, the first lane line is located close to a left side of a road, and it is known that resolution of the image is 250*700, that is, there are 250 pixels in the horizontal direction. If the lane width is 3 meters, it may be learned, based on the intrinsic parameter matrix and the extrinsic parameter matrix of the camera, that the lane width of 3 meters corresponds to 70 pixels in the first image in the horizontal direction, that is, the first distance of the lane width in the first image. Based on the first distance and the location of the first lane line in the image, as shown in the middle image in FIG. 8, it may be estimated that there may be two second lane lines on a right side of the first lane line, and regions in which the second lane lines may exist are separately framed by using rectangular regions, to obtain two first regions.

In this embodiment of this application, the first region is determined based on the first lane line with a good recognition effect, so that the second lane line that is determined in the first region and that is parallel to the first lane line is relatively more accurate, to avoid that a lane line that does not meet an actual situation of the lane line is obtained due to problems such as different shades of the lane line or partial blocking of the lane line, and ensure that a plurality of lane lines are parallel, thereby obtaining a more accurate lane line detection result.

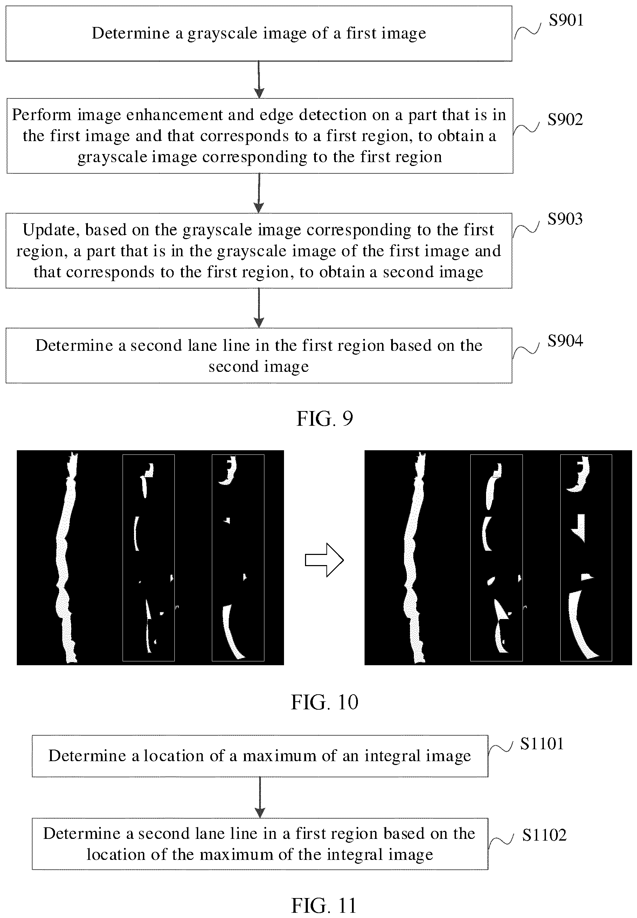

Based on the embodiment corresponding to FIG. 5, in a possible implementation, as shown in FIG. 9, S503 includes the following steps.

S901: Determine a grayscale image of the first image.

In a possible implementation, the grayscale image of the first image is obtained after graying processing is performed on the first image. Graying processing is a common technology, and details are not described herein.

S902: Perform image enhancement and edge detection on a part that is in the first image and that corresponds to the first region, to obtain a grayscale image corresponding to the first region.

In a possible implementation, the vehicle driving system performs, by using a method, for example, sharpening or histogram equalization, image enhancement on the part that is in the first image and that corresponds to the first region.

In a possible understanding manner, the first image may be a color image, and in this case, the part that is in the first image and that corresponds to the first region may also be a color image. When lane line pixel extraction is performed on the first image through edge detection, normalization processing is performed on the first image, and a place in which an edge feature is prominent in the first image is extracted, but a place in which the edge feature is relatively not prominent is not extracted. In this way, image enhancement is performed on the part that is in the first image and that corresponds to the first region, so that a place in which the edge feature is originally not prominent in the part that is in the first image and that corresponds to the first region becomes relatively obvious, and a lane line pixel can be better extracted.

S903: Update, based on the grayscale image corresponding to the first region, a part that is in the grayscale image of the first image and that corresponds to the first region, to obtain a second image.

In a possible understanding manner, the second image may be a grayscale image.

For example, as shown in FIG. 10, a left image in FIG. 10 shows the first region determined in the grayscale image of the first image by using the method in S502. The grayscale image that is of the first region and that is obtained after image enhancement and edge detection are performed on the part that is in the first image and that corresponds to the first region is updated to the grayscale image of the first image, to obtain the second image shown in a right image in FIG. 10.

S904: Determine the second lane line in the first region based on the second image.

For specific implementation of S904, refer to the description in S503. Details are not described herein again.

In this embodiment of this application, image enhancement is performed on the part that corresponds to the first region and whose edge feature is unobvious, so that the second lane line that is determined in the first region and that is parallel to the first lane line is relatively more accurate, to avoid that a lane line that does not meet an actual situation of the lane line is obtained due to problems such as different shades of the lane line or partial blocking of the lane line, and ensure that a plurality of lane lines are parallel, thereby obtaining a more accurate lane line detection result.

Based on the embodiment corresponding to FIG. 9, in a possible implementation, as shown in FIG. 11, S904 includes the following steps.

S1101: Determine a location of a maximum of an integral image.

The maximum of the integral image is a maximum value of a quantity of lane line pixels in a vertical coordinate direction.

In a possible understanding manner, the location of the maximum of the integral image is a location at which lane line pixels are concentrated in the first region.

In a possible implementation, the integral image is constructed based on the second image, and the location of the maximum of the integral image is determined in the integral image constructed based on the second image.

In another possible implementation, the integral image is constructed based on the grayscale image corresponding to the first region, and the location of the maximum of the integral image is determined in the integral image constructed based on the grayscale image corresponding to the first region. The grayscale image corresponding to the first region is obtained after image enhancement and edge detection are performed on the part that is in the first image and that corresponds to the first region.

In a possible understanding manner, the first region is a region in which the second lane line exists, and lane line pixels are centrally distributed in the first region. Therefore, the maximum of the integral image can be obtained in both the foregoing two manners of constructing the integral image.

S1102: Determine the second lane line in the first region based on the location of the maximum of the integral image.

In a possible implementation, the second lane line parallel to the first lane line is separately generated at the location of the maximum of the integral image.

In this embodiment of this application, a location of the second lane line is determined by determining the location of the maximum of the integral image, where the maximum of the integral image is the maximum value of the quantity of lane line pixels in the vertical coordinate direction, so that the second lane line that is generated at the location of the maximum of the integral image and that is parallel to the first lane line is relatively more accurate, to avoid that a lane line that does not meet an actual situation of the lane line is obtained due to problems such as different shades of the lane line or partial blocking of the lane line, thereby obtaining a more accurate lane line detection result.

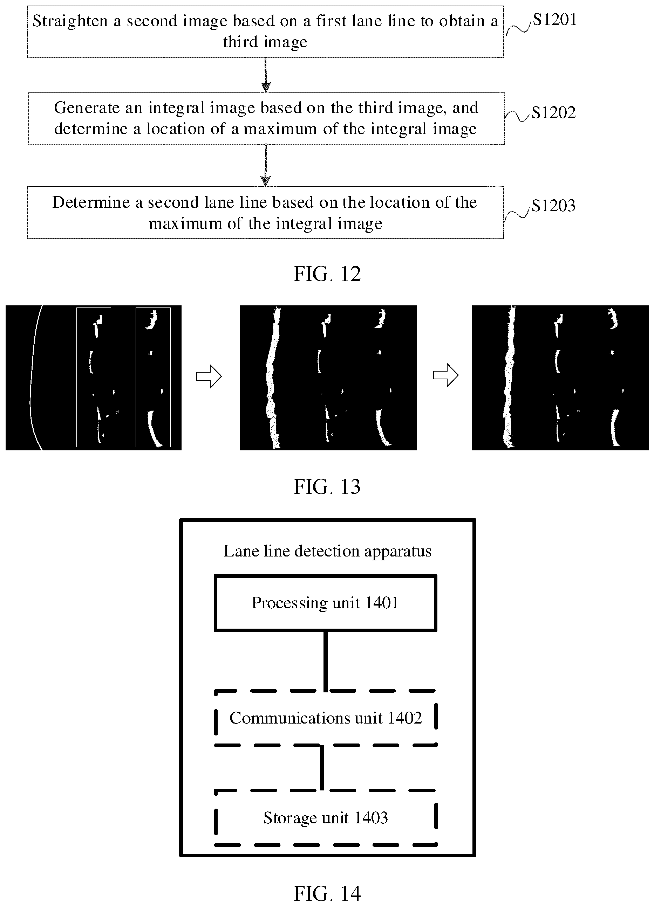

Based on the embodiment corresponding to FIG. 9, in another possible implementation, as shown in FIG. 12, S904 includes the following steps.

S1201. Straighten the second image based on the first lane line to obtain a third image.

In a possible implementation, any pixel of the first lane line is used as a reference point to straighten the first lane line to obtain a third lane line parallel to a vertical axis. Then, based on a movement location and direction of another pixel in the first lane line during straightening, a pixel that is in the second image and that has a same vertical coordinate as the another pixel is straightened to obtain the third image.

For example, a left image in FIG. 13 shows the first lane line obtained based on the first image. If the image has 250*700 pixels, there are 700 rows of pixels in the image. If a quantity of pixels of the first lane line is 700, there are also 700 rows of pixels in the first lane line, and there is one pixel in each row. The pixel in the first row in the first lane line is used as a reference point to move other pixels in the first lane line to a location that has a same horizontal coordinate as the reference point. In a possible understanding manner, when the pixel in the first row in the first lane line is the reference point, the other pixels in the first lane line may be pixels corresponding to the second row to the 700th row in the first lane line. Then, movement locations and directions of the other pixels in the first lane line are recorded. For example, the pixel in the second row in the first lane line is moved by two pixels along a positive half axis direction of a horizontal axis, to obtain the third lane line parallel to the vertical axis.

Further, based on the moving location and direction of the another pixel in the first lane line, a pixel that is in the second image shown in a middle image in FIG. 13 and that has a same vertical coordinate as the another pixel is moved by the same location and direction as the another pixel, for example, a pixel in the second row in the second image is moved by two pixels or the like along a positive half axis direction of a horizontal axis, to obtain the third image shown in a right image in FIG. 13. In a possible understanding manner, the pixel that is in the second image and that has a same vertical coordinate as the another pixel may be a pixel that is in the second image and that is in a same row as the another pixel.

When the first lane line is a vertical lane line, the second image does not need to be straightened based on the first lane line. In this case, S1201 is an optional step.

S1202: Generate an integral image based on the third image, and determine a location of a maximum of the integral image.

Optionally, in this embodiment of this application, the integral image may be generated based on a part that is in the third image and that corresponds to the first region, to determine the location of the maximum of the integral image.

S1203: Determine the second lane line based on the location of the maximum of the integral image.

In a possible implementation, a fourth lane line parallel to the third lane line is generated at the location of the maximum of the integral image, and the second lane line is determined based on the fourth lane line and a movement location and direction of another pixel in the first lane line during straightening.

In a possible understanding manner, the third lane line is obtained after the first lane line is straightened, and the fourth lane line is parallel to the third lane line. In this case, the first lane line is a curved lane line, and the fourth lane line is a vertical lane line parallel to the vertical axis. Therefore, the fourth lane line needs to be restored based on the movement location and direction of the another pixel in the first lane line during straightening, to obtain the second lane line parallel to the first lane line.

For example, the right image in FIG. 13 shows the third image obtained by straightening the second image based on the first lane line. In a process of restoring the fourth lane line, a pixel that is in the fourth lane line and that has a same vertical coordinate as the another pixel is moved in a reverse direction by the same location as the another pixel, to obtain the second lane line. For example, a pixel in the second row in the fourth lane line is moved by two pixels along a negative half axis of the horizontal axis.

Based on any one of the foregoing embodiments, in a possible implementation, the method further includes: The vehicle driving system outputs a lane line detection result including the first lane line and the second lane line.

In a possible implementation, the vehicle driving system may mark the first lane line and the second lane line in the first image, and then output the first image to a display screen in the vehicle driving system.

Optionally, if the first image is obtained by performing inverse perspective transformation on the road picture obtained by the camera, perspective transformation may be performed on the first image including the lane line detection result, and then the first image is output to the display screen in the vehicle driving system.

In a possible implementation, after the vehicle driving system determines the lane line detection result, the vehicle driving system may obtain a driving policy (for example, steering or turning around) based on environment information of an environment in which a vehicle is located, status information of the vehicle, and/or status information of another vehicle in combination with the lane line detection result, to ensure traveling security of the vehicle. Alternatively, the vehicle driving system may send alarm information (an alarm may be sent through screen display, voice broadcast, vibration, or the like) when the vehicle is about to deviate from a lane of the vehicle, and a user may perform manual intervention based on the alarm information, to ensure traveling security of the vehicle.

It should be noted that the foregoing embodiments are described by using an example in which the first image is a color image. In specific application, the first image may alternatively be a processed image. For example, the first image may alternatively be a grayscale image obtained after a road picture is processed. In this case, the step of performing graying processing on the first image may be omitted in the foregoing steps. Details are not described herein.

It should be noted that the foregoing embodiments may be performed by a vehicle driving system or a component (for example, a detection apparatus, a processor, a chip, a controller, or a control unit) in the vehicle driving system, or may be performed by a cloud device communicatively connected to a first terminal. This is not limited in the embodiments of this application. In an example, the detection apparatus may be an image collection apparatus (for example, a camera device), the controller may be a multi domain controller (Multi Domain Control, MDC), and the control unit may be an electronic control unit (Electronic Control Unit, ECU) which is also referred to as a vehicle-mounted computer.

The foregoing describes the method in the embodiments of this application with reference to FIG. 4 to FIG. 13. The following describes a lane line detection apparatus that is provided in the embodiments of this application and that performs the foregoing method. A person skilled in the art may understand that the method and the apparatus may be mutually combined and referenced, and the lane line apparatus provided in the embodiments of this application may perform the steps of the foregoing lane line method.

The following is described by using an example in which each function module is obtained through division based on each corresponding function.

FIG. 14 is a schematic diagram of a structure of a lane line detection apparatus according to an embodiment of this application. The lane line detection apparatus includes a processing unit 1401. The processing unit 1401 is configured to complete a step in lane line detection.

In an example, the lane line detection apparatus is a terminal device or a chip or a chip system applied to the terminal device. The processing unit 1401 is configured to support the lane line detection apparatus in performing S501 to S503, S901 to S904, S1101 and S1102, and the like in the foregoing embodiments.

In a possible embodiment, the lane line detection apparatus may further include a communications unit 1402 and a storage unit 1403. The processing unit 1401, the communications unit 1402, and the storage unit 1403 are connected by using a communications bus.

The storage unit 1403 may include one or more memories. The memory may be a component configured to store a program or data in one or more devices or circuits.

The storage unit 1403 may exist independently, and is connected to the processing unit 101 of the lane line detection apparatus by using the communications bus. The storage unit 1403 may alternatively be integrated with the processing unit.

The lane line detection apparatus may be used in a communications device, a circuit, a hardware component, or a chip.

For example, the lane line detection apparatus may be the terminal device in this embodiment of this application. In this case, the communications unit 1402 may be an input or output interface, a pin, a circuit, or the like. For example, the storage unit 103 may store computer-executable instructions in a method of the terminal device, so that the processing unit 1401 performs the method of the terminal device in the foregoing embodiment. The storage unit 1403 may be a register, a cache, a RAM, or the like. The storage unit 1403 may be integrated with the processing unit 101. The storage unit 1403 may be a ROM or another type of static storage device that can store static information and instructions, and the storage unit 1403 may be independent of the processing unit 1401.

This embodiment of this application provides a lane line detection apparatus. The lane line detection apparatus includes one or more modules, configured to implement the methods in the steps included in FIG. 4 to FIG. 13. The one or more modules may correspond to the steps in the methods in the steps included in FIG. 4 to FIG. 13. Specifically, in this embodiment of this application, for each step in the method performed by the terminal device, the terminal device includes a unit or a module for performing each step in the method. For example, a module that detects a lane line may be referred to as a processing module, and a module that performs a step of processing a message or data on the lane line detection apparatus side may be referred to as a communications module.

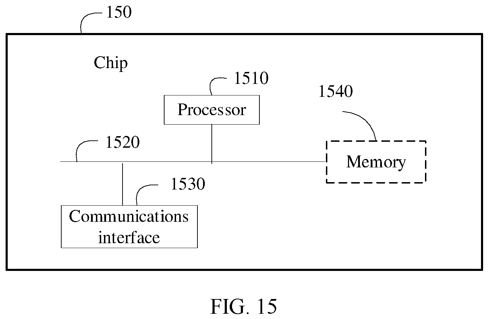

FIG. 15 is a schematic diagram of a structure of a chip 150 according to an embodiment of the present invention. The chip 150 includes one or two or more (including two) processors 1510 and a communications interface 1530.

In a possible embodiment, the chip 150 shown in FIG. 15 further includes a memory 1540. The memory 1540 may include a read-only memory and a random access memory, and provide operation instructions and data for the processor 1510. A part of the memory 1540 may further include a non-volatile random access memory (non-volatile random access memory, NVRAM).

In some implementations, the memory 1540 stores the following elements: an executable module or a data structure, a subset thereof, or an extended set thereof.

In this embodiment of the present invention, a corresponding operation is performed by invoking the operation instructions stored in the memory 1540 (where the operation instructions may be stored in an operating system).

In a possible implementation, structures of chips used in a terminal device, a radio access network apparatus, or a session management network element are similar, and different apparatuses may use different chips to implement respective functions.

The processor 1510 controls an operation of a terminal device, and the processor 1510 may also be referred to as a central processing unit (central processing unit, CPU). The memory 1540 may include a read-only memory and a random access memory, and provide instructions and data for the processor 1510. Apart of the memory 1540 may further include a non-volatile random access memory (non-volatile random access memory, NVRAM). For example, in an application, the memory 1540, the communications interface 1530, and the memory 1540 are coupled together by using a bus system 1520. In addition to a data bus, the bus system 1520 may further include a power bus, a control bus, a status signal bus, and the like. However, for clear description, various types of buses are marked as the bus system 1520 in FIG. 15.

The foregoing communications unit may be an interface circuit or a communications interface of the apparatus, and is configured to receive a signal from another apparatus. For example, when the apparatus is implemented by using a chip, the communications unit is an interface circuit or a communications interface that is of the chip and that is configured to receive a signal from or send a signal to another chip or apparatus.

The method disclosed in the foregoing embodiments of the present invention may be applied to the processor 1510 or implemented by the processor 1510. The processor 1510 may be an integrated circuit chip, and has a signal processing capability. In an implementation process, the steps in the foregoing method may be completed by using a hardware integrated logic circuit in the processor 1510, or by using instructions in a form of software. The processor 1510 may be a general-purpose processor, a digital signal processor (digital signal processing, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1510 can implement or perform the methods, the steps, and the logical block diagrams that are disclosed in embodiments of the present invention. The general-purpose processor may be a microprocessor, or the processor may be any conventional processor or the like. The steps in the methods disclosed with reference to embodiments of the present invention may be directly executed and completed by using a hardware decoding processor, or may be executed and completed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory 1540, and the processor 1510 reads information in the memory 1540 and completes the steps in the foregoing methods in combination with hardware of the processor.

In a possible implementation, the communications interface 1530 is configured to perform receiving and sending steps of the terminal device, the radio access network apparatus, or the session management network element in the embodiments shown in FIG. 4 to FIG. 13. The processor 1510 is configured to perform processing steps of the terminal device, the radio access network apparatus, or the session management network element in the embodiments shown in FIG. 4 to FIG. 13.

In the foregoing embodiments, the instructions that are stored in the memory and that are to be executed by the processor may be implemented in a form of a computer program product. The computer program product may be written into the memory in advance, or may be downloaded and installed in the memory in a form of software.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any available medium accessible by a computer, or include one or more data storage devices such as a server and a data center integrated with an available medium. The available medium may be a magnetic medium (for example, a floppy disk, a hard disk, or a magnetic tape), an optical medium (for example, a DVD), a semiconductor medium (for example, a solid state drive (solid state drive, SSD)), or the like.

An embodiment of this application further provides a computer-readable storage medium. All or some of the methods described in the foregoing embodiments may be implemented by using software, hardware, firmware, or any combination thereof. If the methods are implemented in the software, functions may be stored in the computer-readable medium or transmitted on the computer-readable medium as one or more instructions or code. The computer-readable medium may include a computer storage medium and a communications medium, and may further include any medium that can transfer a computer program from one place to another place. The storage medium may be any target medium that can be accessed by a computer.

In a possible design, the computer-readable medium may include a RAM, a ROM, an EEPROM, a CD-ROM or another optical disk memory, a magnetic disk memory or another magnetic storage device, or any other medium that is configured to carry or store required program code in a form of an instruction or a data structure and that can be accessed by a computer. In addition, any connection is appropriately referred to as a computer-readable medium. For example, if a coaxial cable, an optical fiber cable, a twisted pair, a digital subscriber line (DSL), or wireless technologies (for example, infrared, radio, and microwave) are used to transmit software from a website, a server, or another remote source, the coaxial cable, the optical fiber cable, the twisted pair, the DSL, or the wireless technologies such as infrared, radio, and microwave are included in the definition of the medium. Magnetic disks and optical disks used in this specification include a compact disc (CD), a laser disc, an optical disc, a digital versatile disc (DVD), a floppy disk, and a Blu-ray disc. The magnetic disk usually magnetically reproduces data, and the optical disk optically reproduces data by using a laser. A combination of the foregoing should also be included in the scope of the computer-readable medium. The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A lane line detection method, comprising:

   obtaining a first lane line based on a first image;
   determining at least one first region based on the first lane line and a first distance, wherein the first distance is related to a lane width; and
   determining, in the first region, a second lane line parallel to the first lane line.

2. The method according to claim 1, wherein the first lane line is a lane line with a maximum quantity of pixels in the first image, or a quantity of pixels of the first lane line is greater than a first threshold.

3. The method according to claim 1 or 2, wherein the determining the at least one first region based on the first lane line and the first distance comprises:

   determining the first distance that is in the first image and that corresponds to the lane width; and

determining the at least one first region based on the first distance and a location of the first lane line in the first image.

4. The method according to any one of claims 1 to 3, wherein the determining, in the first region, the second lane line parallel to the first lane line comprises:

determining a grayscale image of the first image; performing image enhancement and edge detection on a part that is in the first image and that corresponds to the first region, to obtain a grayscale image corresponding to the first region; updating, based on the grayscale image corresponding to the first region, a part that is in the grayscale image of the first image and that corresponds to the first region, to obtain a second image; and

determining the second lane line in the first region based on the second image.

5. The method according to claim 4, wherein the determining the second lane line in the first region based on the second image comprises:

determining, in an integral image constructed based on the second image, a location of a maximum of the integral image in the first region, wherein a horizontal coordinate of the integral image is a column quantity of image pixels, a vertical coordinate is a pixel quantity of an image in a vertical axis direction, and the maximum of the integral image comprises a maximum value of a quantity of pixels in the first region in a vertical coordinate direction; and

determining the second lane line based on the location of the maximum of the integral image in the first region.

6. The method according to claim 5, wherein the determining, in an integral image constructed based on the second image, a location of a maximum of the integral image in the first region comprises:

straightening the second image based on the first lane line to obtain a third image, wherein the first lane line in the straightened third image is parallel to a vertical axis;

generating the integral image based on the third image; and

determining the location of the maximum of the integral image in the first region based on the integral image.

7. The method according to claim 6, wherein the straightening the second image based on the first lane line to obtain a third image comprises:

straightening, by using any pixel of the first lane line as a reference point, the first lane line to obtain a third lane line parallel to the vertical axis; and

straightening, based on a movement location and direction of another pixel in the first lane line during straightening, a pixel that is in the second image and that has a same vertical coordinate as the another pixel, to obtain the third image.

8. The method according to claim 7, wherein the determining the second lane line based on the location of the maximum of the integral image in the first region comprises:

generating, at the location of the maximum of the integral image for the third image, a fourth lane line parallel to the third lane line; and determining the second lane line based on the fourth lane line and a movement location and direction of another pixel in the first lane line during straightening.

9. The method according to any one of claims 1 to 8, further comprising:
   outputting a lane line detection result comprising the first lane line and the second lane line.

10. The method according to any one of claims 1 to 9, wherein the first image is a top view image of a lane line.

11. A lane line detection apparatus, comprising:

a processing unit, configured to obtain a first lane line based on a first image, wherein the processing unit is further configured to determine at least one first region based on the first lane line and a first distance, wherein the first distance is related to a lane width; and the processing unit is further configured to determine, in the first region, a second lane line parallel to the first lane line.

12. The apparatus according to claim 11, wherein the first lane line is a lane line with a maximum quantity of pixels in the first image, or a quantity of pixels of the first lane line is greater than a first threshold.

13. The apparatus according to claim 11 or 12, wherein the processing unit is further specifically configured to: determine the first distance that is in the first image and that corresponds to the lane width; and determine the at least one first region based on the first distance and a location of the first lane line in the first image.

**14.** The apparatus according to any one of claims 11 to 13, wherein the processing unit is further specifically configured to: determine a grayscale image of the first image; perform image enhancement and edge detection on a part that is in the first image and that corresponds to the first region, to obtain a grayscale image corresponding to the first region; update, based on the grayscale image corresponding to the first region, a part that is in the grayscale image of the first image and that corresponds to the first region, to obtain a second image; and determine the second lane line in the first region based on the second image.

**15.** The apparatus according to claim 14, wherein the processing unit is further specifically configured to: determine, in an integral image constructed based on the second image, a location of a maximum of the integral image in the first region, wherein a horizontal coordinate of the integral image is a column quantity of image pixels, a vertical coordinate is a pixel quantity of an image in a vertical axis direction, and the maximum of the integral image comprises a maximum value of a quantity of pixels in the first region in a vertical coordinate direction; and determine the second lane line based on the location of the maximum of the integral image in the first region.

**16.** The apparatus according to claim 15, wherein the processing unit is further specifically configured to: straighten the second image based on the first lane line to obtain a third image, wherein the first lane line in the straightened third image is parallel to a vertical axis; generate the integral image based on the third image; and determine the location of the maximum of the integral image in the first region based on the integral image.

**17.** The apparatus according to claim 16, wherein the processing unit is further specifically configured to: straighten, by using any pixel of the first lane line as a reference point, the first lane line to obtain a third lane line parallel to the vertical axis; and straighten, based on a movement location and direction of another pixel in the first lane line during straightening, a pixel that is in the second image and that has a same vertical coordinate as the another pixel, to obtain the third image.

**18.** The apparatus according to claim 17, wherein the processing unit is further specifically configured to: generate, at the location of the maximum of the integral image for the third image, a fourth lane line parallel to the third lane line; and determine the second lane line based on the fourth lane line and a movement location and direction of another pixel in the first lane line during straightening.

**19.** The apparatus according to any one of claims 11 to 18, further comprising:
a communications unit, configured to output a lane line detection result comprising the first lane line and the second lane line.

**20.** The apparatus according to any one of claims 11 to 19, wherein the first image is a top view image of a lane line.

**21.** A lane line detection apparatus, comprising a processor, configured to invoke a program in a memory to perform the method according to any one of claims 1 to 10.

**22.** A chip, comprising a processor and an interface circuit, wherein the interface circuit is configured to communicate with another apparatus, and the processor is configured to perform the method according to any one of claims 1 to 10.

**23.** A computer-readable storage medium, wherein the computer-readable storage medium stores instructions, and when the instructions are executed, a computer is enabled to perform the method according to any one of claims 1 to 10.

FIG. 1

```
┌─────────────────────────────┐
│     Image preprocessing      │
└─────────────────────────────┘
               │
               ▼
┌─────────────────────────────┐
│  Lane line feature extraction │
└─────────────────────────────┘
               │
               ▼
┌─────────────────────────────┐
│      Lane line fitting       │
└─────────────────────────────┘
```

FIG. 2

Vehicle 300

| Traveling system 302 | Sensing system 304 | Control system 306 | Peripheral device 308 |

Processor 313

Instruction 315

Memory 314

Computer system 312

| Power supply 310 | User interface 316 |

FIG. 3

FIG. 4

| Obtain a first lane line based on a first image | ~ S501 |
| --- | --- |

| Determine at least one first region based on the first lane line and a first distance | ~ S502 |
| --- | --- |

| Determine, in the first region, a second lane line parallel to the first lane line | ~ S503 |
| --- | --- |

FIG. 5

FIG. 6

FIG. 7

FIG. 8

Determine a grayscale image of a first image $\quad$ S901

Perform image enhancement and edge detection on a part that is in the first image and that corresponds to a first region, to obtain a grayscale image corresponding to the first region $\quad$ S902

Update, based on the grayscale image corresponding to the first region, a part that is in the grayscale image of the first image and that corresponds to the first region, to obtain a second image $\quad$ S903

Determine a second lane line in the first region based on the second image $\quad$ S904

FIG. 9

FIG. 10

Determine a location of a maximum of an integral image $\quad$ S1101

Determine a second lane line in a first region based on the location of the maximum of the integral image $\quad$ S1102

FIG. 11

Straighten a second image based on a first lane line to obtain a third image ~S1201

Generate an integral image based on the third image, and determine a location of a maximum of the integral image ~S1202

Determine a second lane line based on the location of the maximum of the integral image ~S1203

FIG. 12

FIG. 13

Lane line detection apparatus

Processing unit 1401

Communications unit 1402

Storage unit 1403

FIG. 14

FIG. 15

## INTERNATIONAL SEARCH REPORT

| International application No. |
| --- |
| **PCT/CN2020/122725** |

**A. CLASSIFICATION OF SUBJECT MATTER**

G06K 9/00(2006.01)i

According to International Patent Classification (IPC) or to both national classification and IPC

**B. FIELDS SEARCHED**

Minimum documentation searched (classification system followed by classification symbols)

G06K9/-

Documentation searched other than minimum documentation to the extent that such documents are included in the fields searched

Electronic data base consulted during the international search (name of data base and, where practicable, search terms used)

CNPAT, CNKI, WPI, EPODOC: 车道线, 检测, 识别, 图像, 区域, 第二, 约束, 距离, 间距, 关系, 曲率, 平行, 像素, 坐标, 积分, 拟合, lane line, detect, vehicle, image, region, curve, condition, pixel, characteristic, parallel+, merged, boundary, coordinate, identification, area, second

**C. DOCUMENTS CONSIDERED TO BE RELEVANT**

| Category* | Citation of document, with indication, where appropriate, of the relevant passages | Relevant to claim No. |
| --- | --- | --- |
| X | CN 110287779 A (BAIDU ONLINE NETWORK TECHNOLOGY (BEIJING) CO., LTD.) 27 September 2019 (2019-09-27)<br>description, paragraphs 78-194, and figures 1-11 | 1-4, 9-14, 19-23 |
| A | CN 109583365 A (CHANG'AN UNIVERSITY) 05 April 2019 (2019-04-05)<br>entire document | 1-23 |
| A | CN 104217427 A (NANJING UNIVERSITY OF POSTS AND TELECOMMUNICATIONS) 17 December 2014 (2014-12-17)<br>entire document | 1-23 |
| A | CN 109034047 A (BOE TECHNOLOGY GROUP CO., LTD.) 18 December 2018 (2018-12-18)<br>entire document | 1-23 |
| A | CN 106529493 A (BEIJING UNION UNIVERSITY) 22 March 2017 (2017-03-22)<br>entire document | 1-23 |
| A | JP 6384182 B2 (RICOH K. K.) 05 September 2018 (2018-09-05)<br>entire document | 1-23 |

☐ Further documents are listed in the continuation of Box C.　　☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br><br>**02 July 2021** | Date of mailing of the international search report<br><br>**29 July 2021** |
| Name and mailing address of the ISA/CN<br><br>**China National Intellectual Property Administration (ISA/CN)**<br>**No. 6, Xitucheng Road, Jimenqiao, Haidian District, Beijing 100088**<br>**China** | Authorized officer |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/122725**

| Patent document cited in search report | | | Publication date (day/month/year) | Patent family member(s) | | | Publication date (day/month/year) |
|---|---|---|---|---|---|---|---|
| CN | 110287779 | A | 27 September 2019 | None | | | |
| CN | 109583365 | A | 05 April 2019 | None | | | |
| CN | 104217427 | A | 17 December 2014 | CN | 104217427 | B | 15 March 2017 |
| CN | 109034047 | A | 18 December 2018 | US | 2020026930 | A1 | 23 January 2020 |
| | | | | CN | 109034047 | B | 22 January 2021 |
| CN | 106529493 | A | 22 March 2017 | CN | 106529493 | B | 20 December 2019 |
| JP | 6384182 | B2 | 05 September 2018 | EP | 2838051 | A2 | 18 February 2015 |
| | | | | JP | 2015036984 | A | 23 February 2015 |
| | | | | CN | 104376297 | B | 23 June 2017 |
| | | | | CN | 104376297 | A | 25 February 2015 |

Form PCT/ISA/210 (patent family annex) (January 2015)